# DEMANDE DE BREVET EUROPEEN

(11) **EP 1 698 815 A1**
(43) Date de publication de la demande: **06.09.2006**
(21) Numéro de dépôt: 05290494.3
(22) Date de dépôt: 04.03.2005
(51) Int. Cl.: F16K 17/04, F16K 17/164

(54) **Dispositif de commande d'une soupape de sécurité d'un régulateur de gaz**

(71) Demandeur: Mesura, 57600 Forbach (FR)
(72) Inventeur: Blang, Nicolas, 57500 Saint-Avold (FR); Schladerer, Max, 57600 Oeting (FR)
(74) Mandataire: Thinat, Michel

(57) **Abrégé**

L'invention concerne un dispositif de commande d'une soupape de sécurité d'un régulateur d'une installation de distribution de gaz.

Le dispositif est du type comprenant un clapet de sécurité (12) et une membrane (16) de commande du clapet et des moyens pour vérifier le bon fonctionnement du clapet de sécurité. Le dispositif est caractérisé en ce que les moyens de vérification du bon fonctionnement du clapet de sécurité sont des moyens (59, 69, 62) à actionnement mécanique du déclenchement de sécurité du clapet (14).

L'invention est utilisable pour des régulateurs d'installation de distribution de gaz.

## Description

L'invention concerne un dispositif de commande d'une soupape de sécurité d'un régulateur d'une installation de distribution de gaz, du type comprenant un clapet de sécurité coopérant avec un siège de soupape pour ouvrir ou fermer la communication entre une chambre amont de régulateur et une chambre aval reliée par une tubulure de sortie à un dispositif utilisateur, une membrane de commande du clapet, montée fixe à sa périphérie dans un boîtier enfermant ladite chambre aval et solidarisable et désolidarisable d'une tige porteuse dudit clapet de sécurité, par l'intermédiaire de moyens d'accouplement et de désaccouplement, dans le cas du dépassement d'une pression limite dans ladite chambre aval, ainsi que des moyens d'actionnement des moyens d'accouplement et de désaccouplement pour tester le bon fonctionnement du clapet de sécurité.

Des clapets de sécurité de soupapes à monter dans des installations de distribution sont déjà connus. La maintenance de ces installations impose une vérification périodique du clapet de sécurité quant à son bon fonctionnement, en particulier de son déclenchement de sécurité, la cause la plus probable d'un défaut de fonctionnement étant un collage de la tige de clapet sur un élément d'étanchéité empêchant le clapet de venir en contact avec son siège.

La méthode utilisée à ce jour pour s'assurer du bon fonctionnement du clapet consiste à provoquer artificiellement une surpression dans ladite chambre aval, soit en augmentant la pression dans cette chambre par rapport à la pression atmosphérique. Cette méthode est aussi utilisée pour vérifier le bon fonctionnement du clapet de sécurité au déclenchement par manque de pression en créant un manque de pression dans la chambre aval par coupure de l'alimentation.

Cette façon de procéder connue présente l'inconvénient majeur d'être lourde quant à sa mise en oeuvre et de nécessiter des moyens de mise en défaut de pression ou en surpression appropriés.

La présente invention a pour but de proposer un dispositif de commande du type défini plus haut, qui permet la vérification du bon fonctionnement du clapet de sécurité, d'une manière beaucoup plus simple.

Pour atteindre ce but, le dispositif selon l'invention est caractérisé en ce que les moyens de vérification du fonctionnement du clapet de sécurité sont des moyens à actionnement mécanique volontaire du déclenchement de sécurité du clapet.

L'invention sera mieux comprise, et d'autres buts, caractéristiques, détails et avantages de celle-ci apparaîtront plus clairement au cours de la description explicative qui va suivre faite en référence aux dessins schématiques annexés donnés uniquement à titre d'exemple illustrant un mode de réalisation de l'invention et dans lesquels :
- la figure 1 est une vue en coupe d'un régulateur formé par un détendeur, équipé d'un dispositif de commande du clapet de sécurité selon l'invention ;
- la figure 2 est une vue en coupe selon la ligne II-II de la figure 1 ;
- la figure 3 montre à plus grande échelle le dispositif de commande 13 de la figure 2;
- la figure 4 est une vue en coupe similaire à la figure 2, mais assortie d'un mode de déclenchement à l'aide du capuchon sur le seuil maximal ;
- la figure 5 est une vue similaire à la figure 3 d'un dispositif de commande du clapet de sécurité, dans une version applicable sur des détendeurs existants, et
- la figure 6 est une vue similaire à la figure 3 d'un dispositif de commande de clapet de sécurité selon l'invention, réalisé dans une autre version applicable sur des détendeurs existants.

Les figures 7 et 8 sont des vues similaires à la figure 3, mais montrent le dispositif de commande après un déclenchement de sécurité, sur les seuils de pression respectivement maximal et minimal.

L'invention sera décrite ci-après dans son application à un détendeur pour la régulation automatique de la pression aval d'un fluide gazeux, qui fait partie d'une installation de distribution de ce fluide. Un détendeur de ce type est décrit dans le brevet français N° 2 618 868 de la Demanderesse. Il s'agit d'un détendeur à deux étages de réglage successifs respectivement de pré-détente et de détente, qui sont disposés en série dans la voie d'écoulement traversant le détendeur.

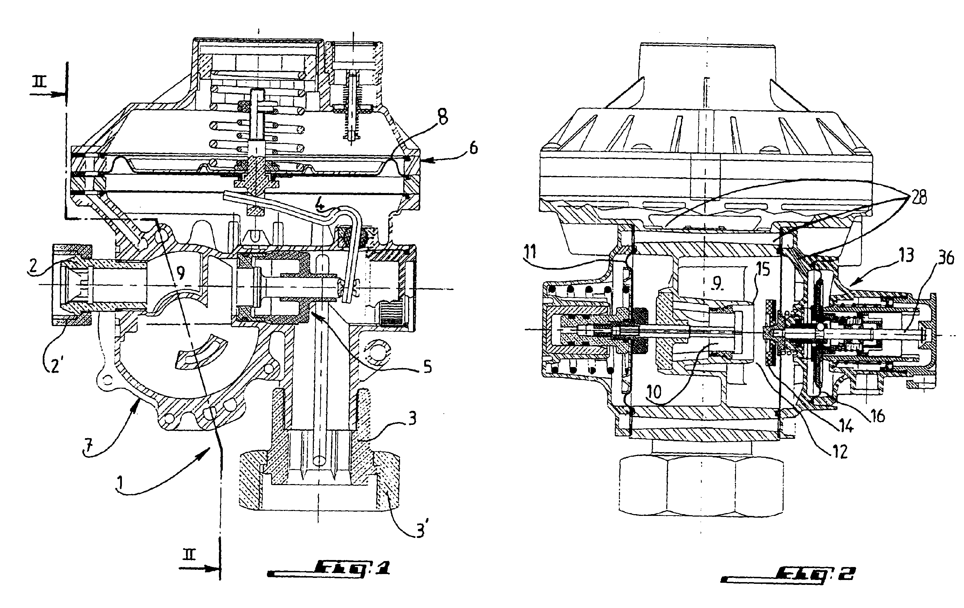

Sur la figure 1, les références 1, 2 et 3 désignent respectivement le corps d'enveloppe ou carter étanche du détendeur, la tubulure d'entrée 2 avec son écrou de raccord 2' et la tubulure de sortie 3 avec son écrou de raccord 3'. Le carter 1 comporte essentiellement une partie supérieure formant cuvette 6 et une partie formant boîtier 7 disposées latéralement à la partie de cuvette 6. Le boîtier 7 renferme une cavité amont 9 qui communique avec la tubulure d'entrée 2 et contient une soupape de pré-détente 10, une membrane de régulation 11 associée à la soupape de pré-détente et ainsi au premier étage de réglage, ainsi qu'une soupape de sécurité 12 qui est commandée par le dispositif de commande selon l'invention et désignée de façon générale par la référence 13.

La partie supérieure formant cuvette 6 renferme une membrane de régulation 8 associée au second étage de réglage et qui commande, par l'intermédiaire d'un levier coudé 4, la soupape aval dite de détente ou de second étage 5.

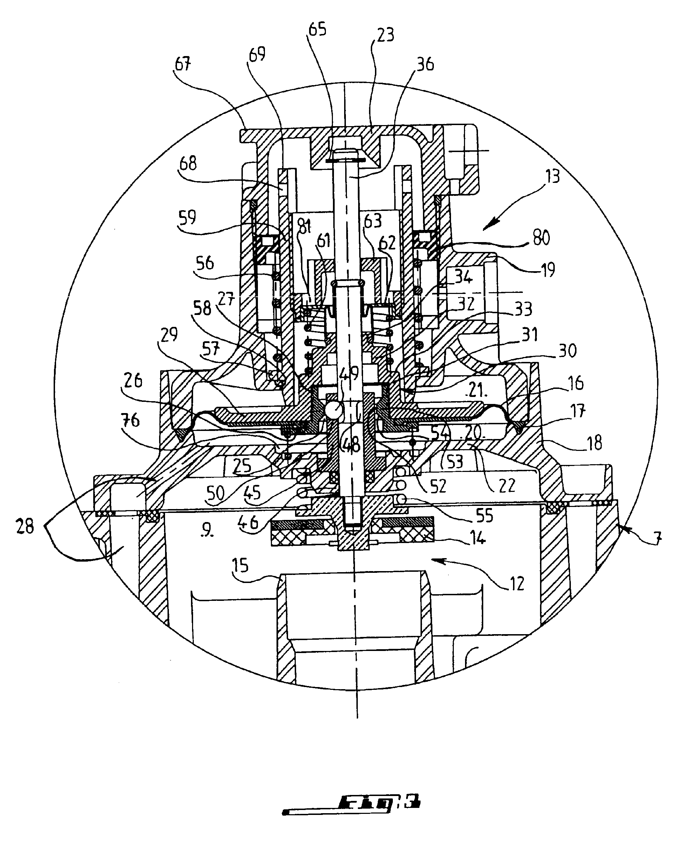

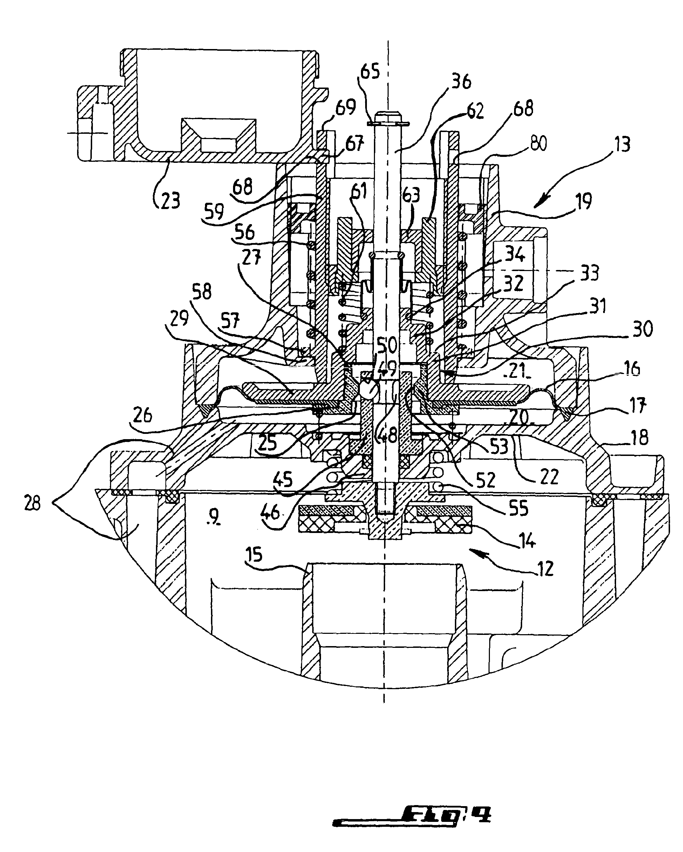

Etant donné que la structure générale qui vient d'être décrite est connue en soi, ainsi que le principe de son fonctionnement, par exemple par le brevet français susmentionné N° 2 618 868, on se contentera de cette brève description qui n'avait pour but que de placer l'invention dans son contexte et on décrira ci-après l'objet de l'invention, à savoir le dispositif de commande 13 de la soupape de sécurité 12 qui comporte un clapet de sécurité 14 et un siège 15 obturable par le clapet 14, en se référant aux figures 3 à 5.

Comme le montrent ces figures, le dispositif de commande 13 comporte essentiellement une membrane étanche et souple 16 fixée à son pourtour externe à la zone circulaire 17 d'une cuvette 18 qui est appliquée à l'extrémité droite sur la figure 2, du boîtier 7, d'une part, et d'un couvercle 19 qui délimite avec la cuvette 18 une chambre qui est divisée par la membrane 16 en deux espaces partiels 20 et 21, l'espace 20 appelé chambre aval ci-après communiquant avec la tubulure de sortie 3 portée par le boîtier 7 à travers des orifices 28 traversant la paroi de fond 22 de la cuvette 18. Le fond du couvercle 19 est fermé par un capuchon ou bouchon 23.

La partie centrale percée d'un orifice circulaire 25 de la membrane 16 est enserré entre le rebord annulaire 26 d'une pièce tubulaire 27 coaxiale à l'orifice 25 et le rebord radial en forme de plateau 29 d'un manchon cylindrique 30 coaxial à l'ouverture 25 et la pièce tubulaire 26. Le manchon 30 présente une configuration étagée et comporte trois portions cylindriques tubulaires successives dont le diamètre va en diminuant du rebord en forme de plateau 29 vers l'extrémité libre, à savoir une portion cylindrique 31 adjacente au plateau 29, une portion intermédiaire 32 formant avec la portion 31 une surface d'épaulement radial 33 et une portion d'extrémité 34 dont la face cylindrique interne sert de face de guidage d'une tige 36 qui traverse coaxialement l'orifice central 25 de la membrane 16 et dont l'extrémité inférieure est solidaire du clapet de sécurité 14 de la soupape 12. La tige est encore axialement guidée dans une pièce tubulaire 45 et dans le perçage central cylindrique 46 de la paroi de fond 22, la pièce tubulaire 45 étant solidaire de cette paroi.

La tige 36 est solidarisable et désolidarisable de la pièce tubulaire 26 qui, avec le manchon 30 à plateau 29, constitue le moyeu de la membrane 16, par des moyens d'accouplement et désaccouplement.

Ces moyens comportent une gorge annulaire 48 pratiquée dans la surface extérieure de la tige 36, d'une profondeur prédéterminée de façon à recevoir en partie une pluralité de billes 49 réparties régulièrement autour de la tige. Ces moyens comportent également des perçages circulaires 50 pratiqués dans une partie tubulaire 45 fixe de guidage de la tige, dont le diamètre est légèrement supérieur au diamètre des billes 49 de façon que chaque perçage puisse loger une bille 49. La disposition relative de la gorge 48 dans la tige 36 et des perçages circulaires 50 est telle que ces derniers se trouvent au niveau de la gorge lorsque la tige occupe sa position d'ouverture du clapet de sécurité 14, avec les billes 49 engagées à la fois dans la rainure 48 et dans leurs perçages 50, comme le montre par exemple la figure 3. Comme on le voit sur cette figure, la profondeur de la gorge 48 et l'épaisseur radiale de la pièce tubulaire percée 45 sont telles que les billes 49 dépassent d'une façon prédéterminée la face périphérique extérieure de la pièce 45.

Dans cette position d'ouverture du clapet 14, les parties des billes 49 légèrement en saillie au-delà de la surface extérieure de la pièce 45 sont en appui contre une surface annulaire cylindrique intérieure 52 d'une nervure 53 radialement en saillie de la surface radialement interne cylindrique de la partie tubulaire de la pièce tubulaire 27. La nervure 53 présente dans une vue en coupe dans la direction de l'axe de la tige un profil tronconique, s'élargit progressivement à partir de sa face cylindrique interne d'appui 52 de part et d'autre de cette dernière en formant des flancs 54 ayant les mêmes inclinaisons mais dans les sens inverses par rapport à l'axe de la pièce.

La largeur de la face d'appui 52, dans la direction axiale, et surtout la distance radiale entre la surface externe de la pièce 45 et la surface interne en regard de la pièce tubulaire 27 par rapport à la profondeur de la gorge 48, sont choisies de façon que, lorsque la membrane 16 est déviée de sa position représentée sur la figure 3 d'une distance suffisante vers le haut et vers le bas, les billes puissent s'échapper de cette gorge et désaccoupler la tige du moyeu de la membrane et la tige 36 puisse se déplacer axialement vers le bas et déplacer le clapet de sécurité 14 dans sa position d'application au siège 15 de la soupape de sécurité et donc de fermeture de celle-ci, sous l'effet d'un ressort hélicoïdal 55 disposé coaxialement autour de la tige entre la paroi de fond 22 et une surface d'appui appropriée du clapet.

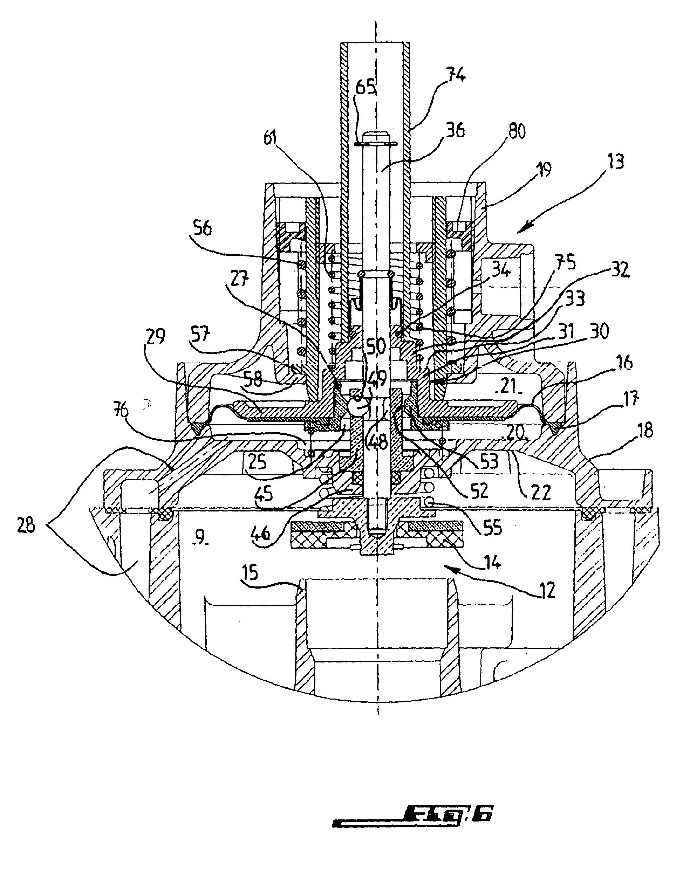

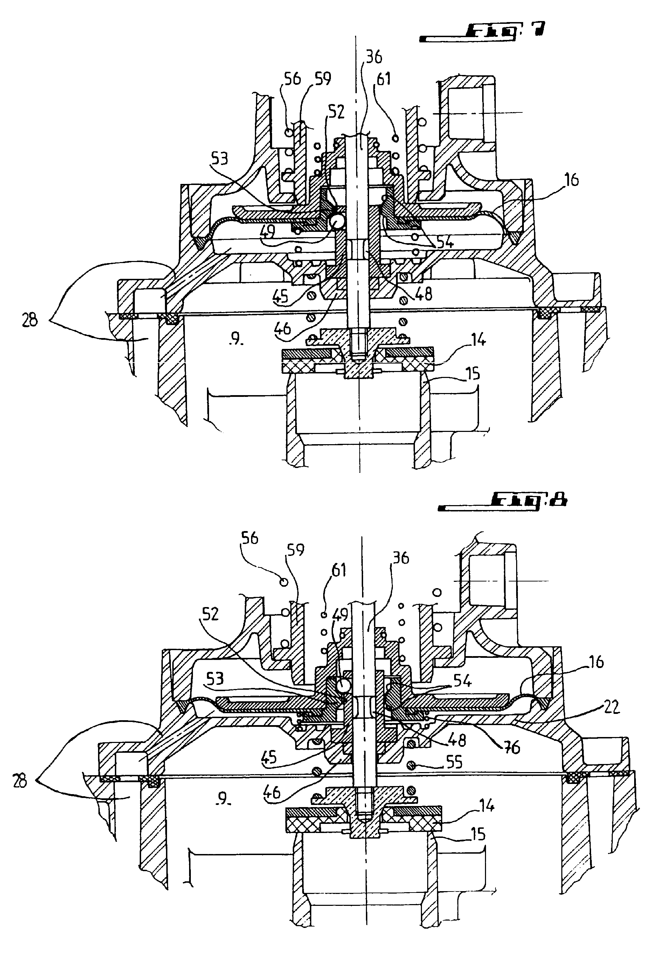

La Figure 7 illustre le dispositif après une fermeture de sécurité suite à un déplacement avec désaccouplement vers le haut, la figure 8 après un déplacement vers le bas. On constate que, dans les deux cas, le retour de la membrane 16 dans sa position d'ouverture du clapet 14 de la figure 3 est empêché par les billes 49 sorties de la gorge 48 de la tige 36 et repoussées vers la face interne de la pièce 26 au dessus ou au dessous de la nervure 53 tout en restant engagées dans leur perçage de logement 50. Dans le cas de la figure 7, le flanc 54 inférieur est en appui sur les billes, tandis que dans le cas de la figure 8, c'est le flanc 54 supérieur qui s'oppose au retour.

Un désaccouplement de la tige 36 et ainsi du clapet de sécurité 14, du moyeu de la membrane 16 doit se produire sous l'effet d'une pression excessive du gaz dans la tubulure de sortie 3, les orifices 28 et ainsi l'espace 20 en dessous de la membrane, c'est-à-dire lorsque la pression dépasse une valeur de seuil maximale prédéterminée. La figure 7 illustre ce cas de désaccouplement.

Le seuil de pression maximale est établi à l'aide d'un ressort 56 interposé entre le moyeu de la membrane 16 ou plus précisément le plateau 29 de la membrane, et le fond du couvercle 19, formé dans l'exemple représenté, par la bague de réglage 80. Pour des raisons qui seront explicitées ci-après, le ressort 56 ne prend pas appui directement sur le moyeu de la membrane 16, mais sur la face supérieure d'un épaulement annulaire 57 d'une entretoise tubulaire 59 qui, elle, s'appuie sur le moyeu de membrane. L'entretoise 59 est disposée coaxialement à la tige 36 à l'intérieur du couvercle 19. A l'état d'ouverture du clapet 14 montré sur la figure 3, l'épaulement 57 repose par sa face inférieure sur une face de butée 58 du couvercle.

Le détendeur selon l'invention prévoit également le déclenchement de sécurité du clapet 14, provoquant l'obturation du siège 15 de la soupape de sécurité 12, lorsque la pression dans la chambre 20 en communication avec la tubulure de sortie 3 et les orifices 28 descend en dessous d'un seuil de pression minimale. Dans ce cas illustré sur la figure 8, la membrane 16 se déplacera vers le bas, par rapport à la figure 3 et assurera le désaccouplement de la tige 36 du moyeu de la membrane 16. Ce seuil minimal est établi à l'aide d'un ressort de consigne 61 interposé coaxialement à la tige 36 et au moyeu de membrane entre la face d'épaulement 33 de la pièce tubulaire 31 et une bague d'appui 62 coaxiale à la tige 36 et en appui contre une bague de réglage 63 déplaçable par vissage axialement dans l'entretoise 59.

Il est encore à noter que la tige 36 comporte à son extrémité supérieure libre un élément de préhension 65 permettant d'exercer une force de traction sur la tige, après l'enlèvement du capuchon 23, pour réaccoupler la tige à la membrane après un déclenchement de sécurité. Pour des raisons qui seront expliquées également ci-après, le capuchon 23 comporte à sa périphérie, au niveau de sa face extérieure, un élément radialement en saillie cylindrique en forme d'un ergot 67 adapté peut être engagé dans un trou 68 complémentaire pratiqué dans la partie d'extrémité libre 69 de l'entretoise 59 pour permettre d'exercer une force de traction vers le haut sur celle-ci.

On décrira ci-après le fonctionnement du dispositif de vérification par action mécanique du déclenchement du clapet de sécurité, selon l'invention, qui vient d'être décrit.

Comme il ressort de la description du détendeur, la tige 36 et ainsi le clapet de sécurité 14 qui est solidaire de cette tige se désaccouplent automatiquement de la membrane 16 lorsque la pression régnant dans la chambre 20 en-dessous de la membrane dépasse une valeur de seuil maximal ou descend en-dessous d'une valeur de seuil minimal. Dans une telle situation, la membrane se déplace vers le haut ou vers le bas, ce qui a pour conséquence que la face de retenue 52 de la nervure 53 de la pièce 27 qui fait partie du moyeu de la membrane 16, en se déplaçant avec la membrane, quitte sa position de retenue des billes 49 dans la gorge 48 de la tige 36. La hauteur dans la direction radiale de la nervure 53 étant supérieure à la profondeur de la gorge 48, les billes peuvent sortir complètement de cette gorge et libérer ainsi la tige qui peut donc se déplacer axialement librement sous l'effet du ressort 55 de rappel et amener le clapet 14 dans sa position de fermeture de la soupape de sécurité 12. La tige peut être accouplée à nouveau à la membrane 16 en exerçant sur cette tige une force de traction à l'aide de l'élément de préhension 65, bien entendu après avoir enlevé le capuchon 23.

Il est à noter que le déplacement de la membrane vers le haut ou vers le bas, entraînant la libération des billes et leur désengagement de la gorge 48, a comme résultat supplémentaire illustré sur les figures 7 et 8 que les billes, empêchent la membrane de revenir dans sa position représentée sur la figure 3 dans la mesure où les faces latérales inclinées ou flancs 54 de la nervure tronconique 53 sont en appui pressé sur les billes. Si le désaccouplement de la tige 36 et la fermeture de sécurité du clapet 14 était provoqué par une pression dans la chambre 20 supérieure au seuil de pression maximal, le ressort 56 en restant comprimé même après le rétablissement de la pression normale dans la chambre 20, continue à rester comprimé et exerce par l'intermédiaire de l'entretoise 59 une pression sur le moyeu de membrane et ainsi à travers la face inclinée 54 de la nervure de retenue 53 sur les billes 49, comme on le voit sur la figure 7. Etant donné que cette force a une composante radiale en direction de l'axe de la tige, lorsque la gorge 48 de la tige passe devant les billes lors du déplacement de réaccouplement ou réarmement de la tige vers le haut, les billes sont amenées à s'engager à nouveau dans la gorge et la membrane peut reprendre sa position d'accouplement à la tige représentée sur la figure 3.

Si le désaccouplement de la tige et la fermeture du clapet de sécurité 14 étaient provoqués par une pression dans la chambre 20, inférieure au seuil minimal, c'est la pression dans la chambre 20, le cas échéant aidé par le ressort 76 entre le moyen de membrane et la paroi 22, dont la présence est cependant optionnelle utile dans le cas de la suppression du ressort 61 de consigne de seuil minimal, qui produirait la force de réengagement des billes dans la gorge 48 de la tige lors du mouvement de réaccouplement par traction de la tige, comme il ressort de la figure 8.

Une caractéristique essentielle de l'invention réside dans le fait que celle-ci propose un dispositif de test ou de vérification du bon fonctionnement du clapet de sécurité à la fois à propos du seuil de pression maximal que du seuil de pression minimal, par actionnement mécanique du déclenchement de sécurité du clapet, c'est-à-dire du désaccouplement de la tige de la membrane.

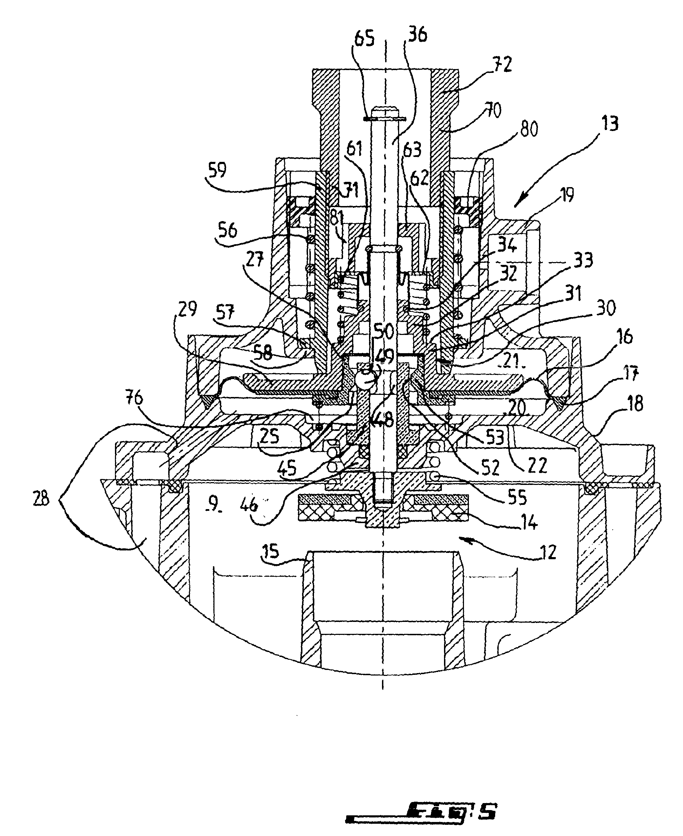

Le désaccouplement de vérification à propos du seuil maximal est obtenu en exerçant une force de traction sur l'entretoise 59 en utilisant par exemple le capuchon 23 comme un outil de traction après engagement de son ergot cylindrique 67 dans un orifice 68 à l'extrémité libre de l'entretoise, comme l'illustre la figure 4. Le mouvement vers le haut de l'entretoise supprime l'effet de pression du ressort d'établissement ou de consigne du seuil maximum 56 sur la membrane. Etant donné que celle-ci, sensible à la pression aval du régulateur régnant dans la chambre 20, n'est plus retenue par le ressort 56 mais que par le ressort 61 de force plus faible, son moyeu se déplace vers le haut et libère les billes 49 et la tige 36 qui provoquent alors la fermeture de la soupape par le clapet de sécurité 14. Après ce déclenchement de la fermeture de sécurité, l'entretoise est relâchée. Mais dans la mesure où la chambre 20 sous la membrane n'est pas en surpression, puisque la pression aval n'est pas modifiée, le clapet de sécurité 14 peut être réarmé immédiatement par traction sur la tige de clapet 36, de la manière expliquée ci-dessus.

Pour s'assurer du bon fonctionnement du clapet de sécurité 14 pour le déclenchement de la fermeture de sécurité dans le cas de la descente de la pression en-dessous du seuil de pression minimal, on exerce une force de pression ou de poussée sur la bague 62 à travers des orifices 81 dans la bague formant butée 63, pour provoquer le déplacement du moyeu de la membrane 16 vers le bas, en créant ainsi la situation qu'engendrait une pression dans la chambre 20, inférieure au seuil de pression minimal. Le déplacement du moyeu entraîne l'effacement de la face de retenue 52 devant les billes 49, ce qui permet à celles-ci de se dégager de la gorge pour que la tige soit libérée. Après le déclenchement de sécurité ainsi réalisé, la bague 62 est relâchée. Etant donné que la pression aval dans la chambre 20 n'a pas été modifiée lors du déclenchement de la fermeture de sécurité du clapet 14, ce dernier peut être réarmé immédiatement par traction sur la tige 36, ce qui provoque le réengagement des billes 49 dans leur gorge 48 de la manière décrite plus haut.

Lorsque le clapet de sécurité assure le contrôle des seuils de pression maximal et minimal, il convient de veiller à ce que la force du ressort 61 d'établissement du seuil de pression minimal soit inférieure à la force de la pression aval régnant dans la chambre 20 et appliquée sur la membrane 16 lors de la traction de l'entretoise 59.

Afin de standardiser la fourniture du clapet de sécurité, lorsque celui-ci assure le contrôle des seuils de pression maximal et minimal, la fonction par déclenchement au seuil maximal peut être neutralisée par blocage à spires jointives du ressort 56 de consigne du seuil de pression maximal. La fonction par déclenchement au seuil de pression minimal peut être neutralisée par suppression du ressort 61 de consigne du seuil de pression minimal. C'est à fin de faciliter le réarmement de la tige de clapet 36 que le ressort de rappel 76 est interposé sous la membrane, entre celle-ci et la paroi de séparation 22, ce ressort de rappel étant de force inférieure à celle du ressort 61 de consigne du seuil de pression minimal. D'une autre façon, la fonction par déclenchement au seuil de pression minimal peut être neutralisée en ramenant la force du ressort 61 de consigne du seuil de pression minimal inférieur à la force du ressort de rappel 76.

Il est encore à noter que le capuchon ou bouchon 23 peut être pourvu de zones transparentes au niveau de l'extrémité supérieure pourvue de l'élément de traction 65, de la tige de clapet 36, afin de visualiser la position réarmée de celle-ci.

La méthode de déclenchement de la fonction de sécurité par une action mécanique, qui vient d'être décrite, peut être utilisée pour assurer la fonction dite "robinet de coupure" sur le régulateur, interrompant alors toute fourniture de gaz à l'aval. Pour ne rendre accessible cette fonction qu'à des personnes habilitées, on pourrait sceller le bouchon 23.

Il est encore à noter qu'afin d'assurer la protection de l'installation en cas d'incendie ou d'excès de températures, les ressorts 56 et 61 de consigne des seuils de pression maximal et minimal et même le ressort de rappel optionnel 76 peuvent être réalisés en un matériau à mémoire de forme sensible à un seuil de température prédéterminé. La force du ressort sera alors modifiée en provoquant le déplacement de la membrane 16 sensible à la pression et le déclenchement de la tige de clapet 36, de façon que le clapet de sécurité 14 interrompe alors toute fourniture de gaz à l'aval.

Bien entendu des multiples modifications peuvent être apportées à l'invention telle que décrite ci-dessus. Cette description n'a été donnée qu'à titre d'exemple. Ainsi, comme l'illustre la figure 5, il est possible de prévoir à titre de moyens de traction de l'entretoise 59 une pièce de rallonge amovible 70 réalisée sous forme d'un manchon cylindrique susceptible d'être relié à l'extrémité supérieure de l'entretoise tubulaire 59, par vissage 71 approprié, et dont l'extrémité supérieure 72 est configurée pour permettre une préhension aisée pour pouvoir exercer la force de traction dans le but de vérifier le bon fonctionnement du clapet de sécurité. Cette rallonge 70 permet l'application de l'invention sur des dispositifs existants.

La figure 6 montre une réalisation avantageuse de l'outil de déclenchement du désaccouplement en simulation d'un manque de pression dans la chambre 20 sous la membrane 16. L'outil est réalisé sous forme d'un manchon 74 qui est introduit coaxialement à la tige 36 à l'intérieur du ressort de consigne de la valeur de seuil inférieure 61 de façon que l'extrémité inférieure puisse prendre appui sur l'épaulement radial 75 formé entre les deux portions cylindriques 32 et 34 de la pièce tubulaire étagée 30. Etant donné que le manchon 74 est suffisamment long, il est aisément possible d'exercer une poussée axiale sur le manchon pour accomplir le déplacement vers le bas de désaccouplement de la tige, de la membrane 16. L'outil 74 est également applicable à des dispositifs de commande existants.

## Revendications

1. Dispositif de commande d'une soupape de sécurité d'un régulateur d'une installation de distribution de gaz, du type comprenant un clapet de sécurité (14) coopérant avec un siège de soupape (15) pour ouvrir ou fermer la communication entre une chambre amont (9) de régulateur et la sortie de celui-ci, une membrane (16) de commande du clapet, montée fixe à sa périphérie dans un boîtier (7) enfermant une chambre aval (20) et comportant un moyeu solidarisable et désolidarisable d'une tige porteuse (36) dudit clapet de sécurité, par l'intermédiaire de moyens d'accouplement et de désaccouplement lors du dépassement d'une pression limite dans ladite chambre aval (20), ainsi que des moyens d'actionnement des moyens d'accouplement et de désaccouplement pour tester le bon fonctionnement du clapet de sécurité, lesdits moyens d'accouplement et désaccouplement comportant des billes (49) retenues dans des perçages (50) de logement d'une pièce fixe (45) et mobiles lors du déplacement du moyeu de membrane (16) entre une position d'accouplement de la tige par engagement partiel dans une gorge (48) pratiqué dans la face périphérique de la tige (36) en étant retenue dans cette position par une face de retenue (52) faisant partie du moyeu et une position de désengagement de la gorge lorsque le moyeu de la membrane s'est déplacé dans une position dans laquelle ladite face de retenue ne retient plus les billes, **caractérisé en ce que** les moyens de vérification du bon fonctionnement du clapet de sécurité sont des moyens (59, 69, 62, 70, 74) à actionnement mécanique du déclenchement de sécurité du clapet (14).

2. Dispositif de commande selon la revendication 1, pourvu de moyens d'accouplement et de désaccouplement automatiques lors du dépassement de la pression dans la chambre aval (20) précitée d'une pression de seuil maximale, **caractérisé en ce que** les moyens à actionnement mécaniques précités comportent un organe (59) de neutralisation du ressort de consigne (56) de la valeur de seuil maximale, associée à la membrane (16), pour vérifier le bon fonctionnement en réponse à une surpression dans la chambre aval (20).

3. Dispositif de commande selon la revendication 2, **caractérisé en ce que** le ressort de consigne (56) prend appui sur la membrane (16) par l'intermédiaire d'une entretoise (59) prenant appui elle-même sur la membrane sous l'effet dudit ressort de consigne, l'entretoise étant déplaçable entre une position en appui sur la membrane (16) et une position dans laquelle elle est dégagée de la membrane d'une distance permettant le déplacement de la membrane (16) dans une position de désaccouplement de la tige (36) porteuse du clapet de sécurité (14).

4. Dispositif de commande selon la revendication 3, **caractérisé en ce que** l'entretoise précitée (59) est un organe tubulaire coaxial à la tige (36), qui prend appui par son extrémité interne sur le moyeu de la membrane, et comporte un épaulement (57) prenant appui sur une butée fixe (58) dans la position d'ouverture du clapet (14), de la membrane (16) et dont l'extrémité supérieure est pourvue de moyens (68, 69, 72) d'application d'une force de traction de déplacement de l'entretoise dans une position de désaccouplement de la membrane (16) de la tige (36).

5. Dispositif selon l'une des revendications 3 ou 4, **caractérisé en ce que** le moyen d'application de la force de traction est formé par le capuchon ou bouchon (23) de la partie de carter du régulateur, qui renferme le dispositif de commande, ce capuchon étant pourvu d'un élément (67) solidarisable de l'extrémité libre de l'entretoise (59).

6. Dispositif selon l'une des revendications 3 ou 4, **caractérisé en ce que** le moyen d'application de la force de traction est une pièce tubulaire de rallonge (70) susceptible d'être connectée à l'extrémité libre de l'entretoise (59), avantageusement par vissage.

7. Dispositif de commande selon l'une des revendications 1 à 6, **caractérisé en ce que** la face de retenue (52) des billes (49) dans la gorge (48) de la tige (36) est une surface de sommet d'une nervure (53) de profil tronconique faisant radialement saillie de la face interne du moyeu de la membrane et dont les faces de flanc (54) dont l'une, supérieure est en appui sur les billes (49) après un désaccouplement de la membrane (16) de la tige (36) de façon que les billes (49) soient repoussées sous l'action du ressort de rappel (76) par ces flancs inclinés (54) dans la gorge (48) de la tige lorsque celle-ci vient au niveau des billes lors d'un déplacement de réaccouplement de la tige de la membrane.

8. Dispositif de commande selon l'une des revendications 1 à 4, pourvu de moyens de désaccouplement de la tige, de la membrane lorsque la pression régnant dans la chambre aval (20) précitée est inférieure d'une valeur de seuil minimale, établie par un ressort de consigne de valeur de seuil minimale, **caractérisé en ce que** les moyens à actionnement mécanique du déclenchement de sécurité du clapet (14) en réponse à un manque de pression dans la chambre aval (20) comporte un organe d'actionnement appliquant une force de poussée sur la membrane (16) pour la déplacer dans sa position de désaccouplement de la tige.

9. Dispositif selon la revendication 7, **caractérisé en ce que** le moyen d'actionnement est une pièce tubulaire (74) adaptée pour être introduite dans le dispositif pour exercer une force de poussée sur le moyeu de la membrane (16).

10. Dispositif selon la revendication 8, **caractérisé en ce que** le moyen d'actionnement est une bague de poussée (62) pour exercer une force de poussée supplémentaire sur le ressort de consigne (61) amenant la membrane (16) dans une position de désaccouplement de la tige (36) porteuse du clapet de sécurité (14).
